# FASCICULE DE BREVET EUROPEEN

(11) **EP 2 532 147 B1**
(45) Date de publication et mention de la délivrance du brevet: **19.08.2015**
(21) Numéro de dépôt: 11702044.6
(22) Date de dépôt: 02.02.2011
(51) Int. Cl.: H04L 29/12

(54) **Procédé de génération d'une adresse SIP publique permanente associée à une identité privée sur un réseau IMS**
Verfahren zur Erstellung einer öffentlichen permanenten SIP-Adresse, die einer privaten Identität in einem IMS-Netz zugeordnet ist
Method for generating a permanent public SIP address associated with a private identity on an IMS network

(30) Priorité: 04.02.2010 EP 10305113
(43) Date de publication de la demande: 12.12.2012
(73) Titulaire: Gemalto SA, 92190 Meudon (FR)
(72) Inventeur: FINE, Jean-Yves, F-13010 Marseille (FR)
(86) Numéro de dépôt international: PCT/EP2011/051492
(87) Numéro de publication internationale: WO 2011/095522

(56) Documents cités:
- WO-A1-2008/031924
- Vance Shipley: "The 3Gdb Home Subscriber Server (HSS)", , 29 décembre 2008 (2008-12-29), XP002589929, Extrait de l'Internet: URL:http://www.3gdb.org/doc/overview-summa ry.html [extrait le 2010-06-30]
- EASTLAKE 3RD MOTOROLA LABS T HANSEN AT&T LABS D: "US Secure Hash Algorithms (SHA and HMAC-SHA); rfc4634.txt", IETF STANDARD, INTERNET ENGINEERING TASK FORCE, IETF, CH, 1 juillet 2006 (2006-07-01), XP015047395, ISSN: 0000-0003
- Rebecca Copeland: "Converging NGN Wireline and Mobile 3G Networks with IMS", 22 décembre 2008 (2008-12-22), Auerbach Publications, XP002589930, ISBN: 978-0-8493-9250-4 page 157 - page 205

## Description

Le domaine de l'invention est celui des télécommunications dans des réseaux de transmission de données. Plus précisément, la présente invention concerne la génération d'une adresse SIP publique permanente associée à une identité privée sur un réseau IMS (IP Multimedia Subsystem).

Un réseau IMS est un réseau IP connecté à un réseau d'accès. Le réseau IMS fournit une combinaison dynamique de transport de voix, vidéo, messages, données, etc. pendant la même session. L'IMS utilise le protocole SIP (Session Initiation Protocol) pour établir et contrôler des communications ou des sessions entre des terminaux d'usagers (appelés points terminaux) ou entre des points terminaux et des serveurs d'application. SIP permet à un appelant d'établir une session par commutation de paquets avec une personne appelée (en utilisant SIP User Agents, UAS, installés dans les points terminaux), même si l'appelant ne connaît pas l'adresse IP courante de l'appelé avant d'initier l'appel.

Les spécifications 3GPP IMS actuelles demandent l'utilisation d'une procédure d'authentification des utilisateurs vers le réseau IMS. Cette procédure est décrite dans 3GPP TS 24.229 et 33.203. En utilisant cette approche, une identité de l'utilisateur privé (IMPI) et une ou plusieurs identités publiques des utilisateurs (IMPU) sont alloués à l'utilisateur par l'opérateur. Afin de participer à des sessions multimédia, l'utilisateur doit enregistrer au moins un IMPU sur le réseau. Les identités sont ensuite utilisées par le réseau pour identifier l'utilisateur lors de l'enregistrement et la procédure d'authentification (l'IMPI est utilisé pour localiser les renseignements sur les abonnés, comme les informations d'authentification utilisateur, tandis que le modèle d'imputation précise l'identité d'utilisateur avec lequel l'utilisateur souhaite interagir, et à laquelle des services spécifiques doivent être attachés). L'IMPI et les IMPU sont stockés dans une application appelée IMS Subscriber Identity Module (ISIM) stockée sur une carte à circuit intégré (UICC) dans le terminal de l'utilisateur.

Chaque IMPU est associée à un soi-disant profil de service. Le profil de service est un ensemble de services et de données connexes, qui comprend, entre autres, les critères de filtrage initial qui fournissent une logique de service simple pour l'utilisateur (par exemple, il définit un ensemble de services IMS que l'identité publique IMPU pourra utiliser).

Le réseau d'accès au réseau IMS est par exemple un réseau UMTS, LTE, WLAN et/ou Internet.

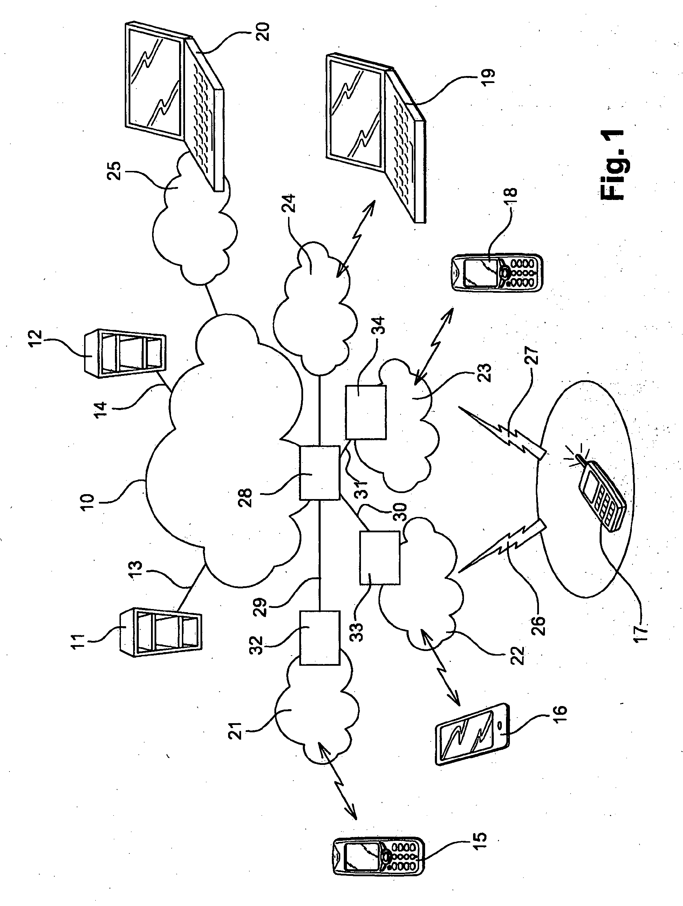

La figure 1 représente un tel réseau IMS connecté à différents réseaux d'accès.

Un réseau IMS 10, tel que défini par 3GPP TS 23.228, est connecté à des serveurs d'application 11, 12 par des liaisons SIP 13, 14. Les serveurs 11 et 12 hébergent des applications IMS représentant des services tels que de la messagerie instantanée, du management de présence (utilisateur présent, absent, en réunion,...), du filtrage d'appel et des sessions temps réel tel que de la voix sur IP (VoIP), de la visioconférence, de la vidéo à la demande, du partage de vidéos, des jeux en réseau ou de télévision via IP.

Des utilisateurs de points terminaux 15 à 20 accèdent à ces services du réseau IMS par l'intermédiaire de réseaux d'accès, tel qu'un réseau UMTS 21, un réseau LTE (Long Term Evolution) 22, un réseau 3GPP2 23, un réseau WLAN 24 ou un réseau Internet 25. Le terminal 17 communique par une liaison sans fil 26 avec le réseau LTE 22 et une liaison EV-DO 27 avec le réseau 3GPP2 23.

Le réseau IMS comporte un proxy 28 relié par des liaisons SIP 29 à 31 à des passerelles d'interconnexion, tel qu'une passerelle GGSN (Gateway GPRS Support Node) 32 notamment chargée de fournir une adresse IP au point terminal 15 constitué par un terminal GPRS pendant toute la durée de sa connexion au réseau IMS, une passerelle PDN GW (Packet Data Network Gateway) 33 assurant le même service pour les terminaux LTE 16 et 17, et une passerelle PDSN (Packet Data Serving Node) 34 assurant une connexion via le réseau 3GPP2 23 du terminal 18 de type CDMA 2000.

L'accès aux services du réseau IMS 10 par les utilisateurs des points terminaux 15 à 20 est obtenu après que ces utilisateurs se soient connectés à leurs réseaux d'accès et aient demandé une connexion IP vers ce réseau IMS 10. Les points terminaux peuvent également communiquer entre eux par l'intermédiaire du réseau IMS, par exemple par VoIP.

L'authentification des points terminaux par le réseau IMS 10 est obtenue grâce à une identité privée IMPI, généralement comprise dans une application USIM ou ISIM embarquée dans les points terminaux 15 à 20. Chaque point terminal possède sa propre identité privée: Au cours de la demande d'accès au réseau IMS 10, un point terminal envoie son IMPI au réseau 10 et, s'il y est authentifié (dans un serveur d'enregistrement appelé HSS), des droits d'accès lui sont accordés en fonction de son profil et de son abonnement. Le réseau IMS procède notamment à la facturation de l'utilisateur et au contrôle de la session.

Chaque point terminal 15 à 20 renferme également au moins une adresse publique (donc non secrète) IMPU qui permet à son utilisateur de requérir et recevoir des communications avec d'autres utilisateurs ou d'accéder à un service. Les IMPU se présentent sous la forme d'un SIP URI (Unified Resource Identifier) tel que défini dans les recommandations IETF RFC 3261 et IETF RFC 2396. A titre d'exemple, une adresse IMPU pourrait se présenter sous la forme :
sip : martin@gemalto.com
   ou alors sous la forme d'un numéro de téléphone :
sip : 0123456789@gemalto.ims.com.
A contrario, le format d'une adresse privée IMPI est du type :
<xyz>@gemalto.com
avec <xyz> étant une chaîne de caractères quelconques, le format d'un IMPI étant dit Network Access Identifier tel que décrit dans la recommandation IETF RFC 2486.

Les IMPU et l'IMPI sont classiquement stockés dans l'application ISIM d'un point terminal, comme décrit dans "The 3GdB Home Subscriber Server" 2008, <http://www.3gdb.org/doc/overview.summary.html>. Le point terminal peut comporter un logiciel qui peut enregistrer des IMPU ou alors il est laissé à son utilisateur le droit d'enregistrer des IMPU.

Si le point terminal ne comporte pas d'application ISIM ou USIM, les IMPU et l'IMPI sont stockés dans une mémoire du point terminal. Dans un mode de réalisation classique, l'ISIM est stockée dans un élément sécurisé, par exemple sur une carte à puce UICC extractible du point terminal. Une carte UICC peut porter une ou plusieurs applications ISIM ou USIM. L'élément sécurisé peut également faire partie intégrante du point terminal.

Après ou pendant l'authentification d'un point terminal par reconnaissance de son IMPI et de la vérification des secrets dont il dispose, le point terminal envoie une de ses adresses IMPU au HSS du réseau IMS 10 afin de s'y enregistrer et de bénéficier d'un service IMS.

Le problème que se propose de résoudre la présente invention est le suivant : l'identité privée IMPI, par exemple comprise dans une carte à puce insérée dans un terminal mobile, n'est transmise qu'une seule fois au HLR lors de la procédure d'authentification et son format ne permet pas au réseau IMS de s'adresser directement à la carte. Il serait donc nécessaire que les terminaux mobiles modifient l'IMPI de la carte en une adresse ressemblant à un IMPU afin que le réseau puisse s'adresser à la carte, par exemple pour pouvoir y mettre à jour des données via OTA. Ceci nécessite une modification et une standardisation des terminaux mobiles.

Une autre solution est que la carte (ou l'entité renfermant l'IMPI) gère la procédure d'enregistrement avec le réseau IMS. Ceci revient à avoir deux entités qui s'enregistrent auprès du HSS, d'une part le terminal mobile faisant office de point terminal, et d'autre part la carte. Deux liaisons sécurisées IPsec coopérant avec un proxy au niveau du réseau IMS (du HSS) doivent alors pouvoir être établies, ce qui entraîne une surchargé au niveau du proxy et une modification du réseau IMS. Les opérateurs gérant des réseaux IMS doivent donc ajouter ces proxys au niveau de leurs réseaux, ce qui engendre des coûts supplémentaires.

La présente invention a notamment pour objectif de remédier à ces inconvénients.

Plus précisément, un des objectifs de l'invention est de fournir un procédé permettant de générer une adresse SIP publique permanente associée à une identité privée IMPI sur un réseau IMS afin que le réseau puisse s'adresser directement et sans divulgation de l'identité privée IMPI à l'entité renfermant cette identité privée (carte, élément sécurisé, point terminal,...).

Cet objectif, ainsi que d'autres qui apparaîtront par la suite, est atteint grâce à un procédé conforme à la revendication 1.

L'invention concerne également un enregistrement par le réseau IMS d'au moins une adresse publique différente de l'adresse publique permanente, le réseau IMS procédant à un enregistrement implicite de l'adresse SIP publique permanente conformément à la spécification technique 3GPP TS 23.228 V8.9.0 de juin 2009.

La fonction univoque, non réversible et sans collisions est préférentiellement un SHA-256.

D'autres caractéristiques et avantages de l'invention apparaîtront à la lecture suivante d'un mode de mise en oeuvre avantageux de l'invention, donné à titre illustratif et non limitatif, et des figures annexées dans lesquelles :
- la figure 1 a été décrite en référence à l'état de la technique ;
- la figure 2 est un schéma représentant le fonctionnement du procédé selon la présente invention.

La figure 1 a été décrite précédemment en référence à l'état de la technique.

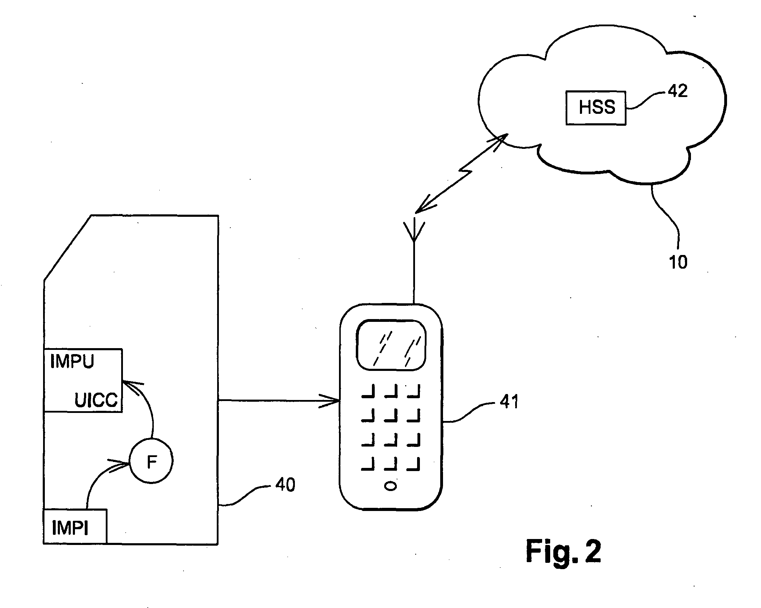

La figure 2 est un schéma représentant le fonctionnement du procédé selon la présente invention.

Sur cette figure, une carte à puce, par exemple de format ID-0, est comprise dans un point terminal 41 constitué par un terminal de radiotéléphonie mobile. La carte 40 comprend une ISIM renfermant une identité privée IMPI. Selon l'invention, il est proposé d'appliquer à l'identité privée IMPI une fonction F univoque, non réversible et sans collisions afin d'obtenir une adresse SIP publique permanente, notée IMPU_{UICC}. La fonction F doit être univoque afin qu'à une IMPI donnée, il ne puisse correspondre qu'une IMPU_{UICC}. Elle doit également être non réversible, c'est-à dire qu'en connaissant l'IMPU_{UICC}, il ne soit pas possible d'en déduire l'IMPI à partir de laquelle il a été obtenu, ceci afin de conserver l'IMPI secrète. Enfin, la qualité de non collision permet de s'assurer qu'en adressant la carte UICC (comme il sera vu par la suite) avec l'IMPU_{UICC} obtenu par la fonction F, on s'adressera bien à l'UICC choisi et non à une autre UICC ayant une IMPI différente.

On aura ainsi généré, à l'aide de la fonction F et à l'intérieur de l'UICC 40, une adresse publique IMPU_{UICC} de l'UICC à partir de son identité privée IMPI.

Dans un mode de mise en oeuvre préférentiel, la fonction F est une fonction de hachage de type SHA, par exemple 9HA-256. En appliquant à un bloc de 128 bits une fonction SHA-256, on obtient en sortie un condensat (« hash » en anglais) de 256 bits. Avec une telle fonction F, si un opérateur crée 2¹²⁸ IMPI différents, la probabilité de collision est de 1. A titre d'information, une adresse IPV6 mesure 16 octets, soit 128 bits. En utilisant l'argument théorique du paradoxe des anniversaires pour garantir qu'il n'y a pas de collision, la sortie de la fonction de hachage doit donc être supérieure ou égale à 256 bits. La fonction SHA-256 convient donc parfaitement pour transformer le format d'un IMPI en un format d'IMPU.

Une autre alternative pour la fonction F est le SHA-1, le SHA-3 ou alors le Ripend-160 utilisé essentiellement au Japon.

Comme indiqué précédemment, afin d'accéder à un service IMS, l'UICC 41 transmet une adresse publique IMPU au réseau IMS 10 pendant ou après l'authentification de la carte 40 (par son IMPI), via le terminal mobile 41. Le réseau 10 comprend notamment un serveur d'enregistrement HSS noté 42 qui comprend tous les IMPI et IMPU des utilisateurs.

Le procédé de l'invention s'applique également à ce serveur d'enregistrement 42 qui, à partir des différents IMPI qu'il contient, calcule les adresses SIP IMPU_{UICC} résultants à l'aide de la même fonction F utilisée au niveau de l'UICC 40. Le serveur d'enregistrement 42 comprend donc non seulement les IMPI et IMPU des abonnés au réseau IMS 10 mais également les IMPU_{UICC} obtenus par la fonction F. A réception d'un IMPU, le serveur d'enregistrement 42 effectue une opération connue sous le nom d'enregistrement implicite : l'enregistrement implicite consiste à associer à une adresse publique IMPU au moins une autre adresse publique du même abonné. A titre d'exemple, si un abonné transmet une adresse publique IMPU₁ au HSS 42, cet HSS 42 enregistrera non seulement l'adresse IMPU₁ mais également d'autres adresses publiques de cet abonné, notées IMPU₁, avec i entier appartenant à [2, n], avec n pouvant être infini en théorie. Si par exemple n = 2, l'enregistrement d'une adresse publique IMPU₁ par le HSS 42 provoquera l'enregistrement implicite (automatique) des adresses IMPU₂ et IMPU₃ de ce même abonné.

Plus précisément, les IMPU d'un utilisateur peuvent être regroupés en Implicit Registration Sets (IRS). Lorsque l'utilisateur enregistre l'un de ses IMPU dans un IRS, tous les autres (non prescrits) IMPU au sein de cette IRS sont également enregistrés dans le réseau. Au cours de la procédure d'enregistrement, le terminal de l'utilisateur est informé sur l'ensemble complet des IMPU qui ont été implicitement enregistrés dans le réseau à la suite de la procédure d'enregistrement. Le terminal peut alors utiliser l'une de ces IMPU pour établir des communications sortantes et peut s'attendre à recevoir des communications entrantes à partir d'un de ces IMPU. On se référera à la spécification technique 3GPP TS 23.228 V8.9.0 de juin 2009 pour plus d'informations à ce sujet.

A cet égard, l'invention propose d'associer à une ou plusieurs des adresses publiques IMPU de l'abonné comprenant une UICC selon l'invention (comprenant la fonction F), l'IMPU_{UICC} de cet abonné. Ainsi, pour un abonné, le simple fait de demander l'enregistrement d'une de ses adresses publiques, provoquera également l'enregistrement d'une adresse correspondant à celle de son UICC, à savoir IMPU_{UICC}. Le réseau IMS est ainsi capable d'adresser directement l'UICC de l'abonné, par exemple via OTA pour y effectuer des mises à jour.

L'appairage entre une IMPI et une adresse SIP IMPU_{UICC} peut être réalisé dans le HSS 42 hors connexion ou lors d'une connexion : en mode hors connexion, le HSS calcule les adresses SIP IMPU_{UICC} à partir des identités privées IMPI des abonnés et les associe dans une table. A la réception d'une IMPI (lors d'une demande d'authentification), le HSS reconnaît l'IMPI de l'abonné et connaît à l'avance l'IMPU_{UICC} qu'il affectera, par la procédure d'enregistrement implicite décrite plus haut, à cet abonné lors d'une demande d'enregistrement d'une IMPU de cet abonné. En mode connexion, le HSS reçoit l'IMPI de l'abonné calcule alors (à l'aide de la fonction F) l'adresse SIP IMPU_{UICC}. Cette adresse SIP IMPU_{UICC} pourra être stockée en correspondance de l'IMPI associé (de manière définitive, afin de ne pas avoir à recalculer IMPU_{UICC} lors de chaque réception d'un IMPI). Celui-ci sera enregistré par enregistrement implicite à la première demande d'enregistrement d'une IMPU de cet abonné.

En l'absence d'une ISIM dans le point terminal, le réseau GPRS utilise l'IMSI et le MSISDN compris dans l'USIM pour générer des identifiants IMS (IMPI et IMPU) temporaires L'invention s'applique également dans la mesure où cet IMPI temporaire peut être utilisé pour générer IMPU_{UICC}.

L'invention s'applique que le point terminal comporte ou non d'UICC : l'application ISIM peut être enregistrée dans un ordinateur portable (20, figure.1) accédant à Internet relié au réseau IMS. L'UICC peut également être remplacée par un élément sécurisé, tel qu'un dongle USB par exemple.

## Revendications

1. Procédé de génération d'une adresse SIP publique permanente associée à une identité privée sur un réseau IMS (10), ledit procédé consistant à appliquer à ladite identité privée une fonction (F) afin d'obtenir ladite adresse SIP publique permanente, **caractérisé en ce que** ladite fonction (F) est une fonction univoque, non réversible et sans collisions et **en ce qu'**il est mis en oeuvre dans un élément (HSS) d'un réseau IMS (10).

2. Procédé selon la revendication 1, **caractérisé en ce que** ledit réseau IMS réalise un enregistrement d'au moins une adresse publique différente de ladite adresse SIP publique permanente, ledit réseau procédant à un enregistrement implicite de ladite adresse SIP publique permanente conformément à la spécification technique 3GPP TS 23.228 V8.9.0 dé juin 2009.

3. Procédé selon l'une des revendications 1 et 2, **caractérisé en ce que** ladite fonction univoque, non réversible et sans collisions est un SHA-256.

## Patentansprüche

1. Verfahren zur Erzeugung einer öffentlichen permanenten SIP-Adresse, die einer privaten Identität auf einem IMS-Netz (10) zugeordnet ist, wobei das genannte Verfahren darin besteht, auf die genannte private Identität eine Funktion (F) anzuwenden, um die genannte öffentliche permanente SIP-Adresse zu erhalten, **dadurch gekennzeichnet, dass** die genannte Funktion (F) eine eindeutige, nicht reversible Funktion ohne Kollisionen ist und dass es in einem Element (HSS) eines IMS-Netzes (10) umgesetzt wird.

2. Verfahren gemäß Anspruch 1, **dadurch gekennzeichnet, dass** das genannte IMS-Netz eine Abspeicherung von wenigstens einer von der genannten öffentlichen permanenten SIP-Adresse unterschiedlichen öffentlichen Adresse realisiert, wobei das genannte Netz gemäß der technischen Spezifikation 3GPP TS 23.228 V8.9.0 aus Juni 2009 eine implizite Abspeicherung der genannten öffentlichen permanenten SIP-Adresse vornimmt.

3. Verfahren gemäß Anspruch 1 und 2, **dadurch gekennzeichnet, dass** die genannte eindeutige, nicht reversible Funktion ohne Kollision ein SHA-256 ist.

## Claims

1. A method for generating a permanent public SIP address associated with a private identity on an IMS network (10), with said method consisting in applying to said private identity a function (F) in order to obtain said permanent public SIP address, **characterized in that** said function (F) is a one-to-one, non-reversible and collision-free function and **in that** it is implemented in an element (HSS) of an IMS network (10) .

2. A method according to claim 1, **characterized in that** said IMS network performs the registering of at least one public address different from said permanent public SIP address, with said network executing an implicit registering of said permanent public SIP address in accordance with the 3GPP TS 23.228 V8.9.0 June 2009 technical specification.

3. A method according to one of claims 1 or 2, **characterized in that** said one-to-one, not reversible and collision-free function is a SHA-256.
